# EUROPEAN PATENT SPECIFICATION

(11) **EP 3 627 022 B1**
(45) Date of publication and mention of the grant of the patent: **21.12.2022**
(21) Application number: 18195626.9
(22) Date of filing: 20.09.2018
(51) Int. Cl.: F16K 31/60, F16K 35/04, F16K 37/00, F16K 41/02, F16K 1/52, F24D 19/10, F16K 27/02

(54) **VALVE WITH PRESETTING ELEMENT**
VENTIL MIT VOREINSTELLUNGSELEMENT
SOUPAPE AVEC ÉLÉMENT DE PRÉRÉGLAGE

(43) Date of publication of application: 25.03.2020
(73) Proprietor: Danfoss A/S, 6430 Nordborg (DK)
(72) Inventor: HØLCK, Poul, 6430 Nordborg (DK); MARKVART, Arne, 6430 Nordborg (DK)
(74) Representative: Patentanwälte Olbricht Buchhold Keulertz

(56) References cited:
- EP-A1- 3 193 050
- EP-A1- 3 193 064
- DE-A1- 4 107 969
- DE-C- 517 640
- JP-A- 2008 248 540
- US-A- 3 799 190
- US-A1- 2006 033 066
- US-A1- 2009 050 650
- US-A1- 2015 159 799

## Description

The invention relates to a valve, e.g. for use as a thermostat valve in a heating or cooling system. More particularly, the invention relates to a valve including a movable presetting element to adjust a maximum flow through a valve opening.

For example, DE 4107969 A1 describes a lower part of a thermostat valve including a presetting body which is rotatable within a sleeve. The valve includes a valve seat and a flow opening allowing a flow of heating fluid within a heating system. The presetting body includes multiple flow limiting openings of different cross-section. By turning the presetting body with respect to the sleeve, different flow-limiting openings may be brought into overlap with the flow opening, posing different flow resistance to the heating fluid. To adjust the presetting body, a coupling to a presetting tool is provided. To avoid undesired intermediate positions, the presetting tool may comprise detent means allowing a noticeable detent if a flow limiting opening is in correspondence with the flow opening.

EP3 193 064 A1 discloses a valve according to the preamble of claim 1.

It may be considered an object to provide a valve with an easily adjustable presetting element.

This is addressed by a valve according to claim 1. Dependent claims refer to preferred embodiments.

The valve according to the invention comprises an adjustable valve opening. A valve seat is arranged between a first and second fluid passage. A valve element cooperates with the valve seat to regulate the fluid flow between a first and second fluid passage. The valve opening is adjustable by relative movement of the valve element and the valve seat. Preferably, the movement may be a linear displacement, e.g. of a valve stem.

A movable presetting element is provided to adjust a maximum flow through the valve opening. The presetting element is movable to change the effective free cross-section of a passing opening for the flow through the valve. With respect to the fluid flow, the passing opening is preferably arranged in series to the valve seat. A larger effective cross-section of the passing opening will thus allow a higher maximum flow through the valve, whereas a smaller effective cross-section will stronger limit the maximum flow. Thus, the position of the presetting element may determine the maximum flow through the valve without a direct influence on the positioning of the valve element and valve seat. Preferably, the presetting element may be rotatable.

According to the invention, feedback means are arranged to provide tactile feedback to movement of the presetting element. This may be understood to mean that in response to movement of the presetting element a perceptible signal may be provided, which preferably may have a modulated and/or repetitive pattern. The perceptible signal may be of any kind to be noticed, e.g. when touching a part of the valve. For example, it may be a force signal, a vibration signal, and/or a sound signal. The feedback may e.g. be provided as a vibration or pulsed force in response to the movement, in particular a variable resistance to the movement. It is preferred to provide more than 5, further preferred more than 10 pulses or vibrations in response to movement over the movement range of the presetting element.

Providing such tactile feedback allows to adjust the presetting element without visual inspection, which is highly advantageous in particular for a valve arranged in a position where it is not easily accessable and/or a line of sight may be blocked.

According to preferred embodiments, the feedback means may comprise detent means with multiple detent positions arranged along the movement range. While equal spacing of the detent positions is preferred, different patterns may alternatively be possible. If the signal is a pulse or vibration signal, each detent or group of detents may correspond to one pulse or vibration.

In preferred embodiments, the presetting element may be connected to one of the fluid passages by a flow channel, and may comprise at least one flow opening portion, which may be spaced from the valve seat. The flow opening is preferably arranged in series to the valve seat. By movement of the presetting element, the flow opening portion may be selectively aligned with the flow channel to thus change the effective free cross-section for the flow, setting a desired degree of flow resistance.

According to the invention, the presetting element comprises a sleeve portion rotatable around a longitudinal axis. The flow opening is provided as a radial opening in the sleeve portion. The flow channel may comprise a radial flow channel opening formed in a ring coaxial with the sleeve portion. By relative rotation of the ring and the sleeve portion a degree of overlap between the flow channel opening and the radial flow opening may be selected.

The flow opening and/or the flow channel opening may be of different shape, e.g. as rounded bores, rectangular windows or other shape. In one embodiment, at least one of the openings may have a variable width portion, i.e. the width measured in a direction traverse to the movement of the presetting element may vary along the movement direction. This allows a fine adjustment of a desired flow resistance. In the case of the flow channel opening and the flow opening being provided in radial direction on parts rotatable with respect to each other, at least one of the openings may have a width varying around the circumference.

While it is possible to provide the feedback means uniform over the entire movement range of the presetting element, it is preferred to provide a non-uniform arrangement in order to allow a user to recognize an absolute position of the presetting element from the tactile feedback. Accordingly, in one embodiment, the presetting element may be movable at least over a first and a second movement sector. The feedback means may be configured to provide different tactile feedback in the two movement sectors, differing e.g. by the strength and/or frequency of feedback pulses (in response to uniform movement). In a particularly preferred embodiment, the feedback means may be configured to provide tactile feedback in the first movement sector, and no tactile feedback in the second movement sector. By providing different feedback in the two sectors, and in particular by not providing feedback in the second sector, the sector boundary is easily discernable, allowing the user to establish a sector boundary as a reference position without visual inspection. The first movement sector, in which the feedback is provided, may extend over a larger portion of the movement range than the second movement sector. For example, in the case of the presetting element being rotatable around a longitudinal axis, the first movement sector may extend over a larger portion of the circumference, e.g. more than 180°, preferably more than 200°, allowing to use the larger first movement sector for fine adjustment.

It is particularly preferred for the presetting element to be turnable over more than 360°, in particular being freely rotatable without stop. If movement sectors with distinguishable tactile feedback are provided, the user may always establish a desired reference position by simply turning in one direction until a sector boundary becomes noticeable.

In preferred embodiments, the feedback means may comprise a feedback profile with a plurality of elevations and/or indentations, and at least one spring loaded engagement element configured to engage the feedback profile. For example, the feedback profile may comprise multiple teeth with inclined slope, so that an engagement element pressed against the feedback profile in traverse direction by spring action leads to the desired tactile feedback.

The presetting element preferably has a handle element accessible from outside, or is coupled to one, allowing manual adjustment of the presetting element by the movement of the handle. In a preferred embodiment, the handle may comprise a rotatable handle element, e.g. a cap or ring.

In an example not being part of the claimed invention, the feedback means may be provided as elements separate from the presetting element, but coupled to its movement. For example, if a handle element is provided separate from the presetting element, the feedback means may be provided on the handle element. As will be further explained in the detailed description, the feedback means may be provided on an element rotationally coupled to the presetting element. It is, however, preferred, to provide the feedback means on the presetting element, thereby eliminating play and making certain that the presetting position is kept even if some parts of the valve, such as e.g. a separate handle, may be disassembled. Acording to the invention, one of two elements constituting the feedback means, e.g. a feedback profile or an engagement element is provided directly on the presetting element and integrally formed therewith. It is possible to provide multiple feedback means in different places of the valve.

Preferred embodiments of the invention will now be described with reference to the figures, wherein
- Fig. 1: shows a perspective view of an embodiment of a valve;
- Fig. 2: shows a side view of the valve of figure 1;
- Fig. 3: shows a sectional view along A..A in figure 1;
- Fig. 4: shows an exploded view of the valve;
- Fig. 5: shows a perspective exploded view of elements of the valve;
- Fig. 6: show a sectional view along B..B in figure 3.

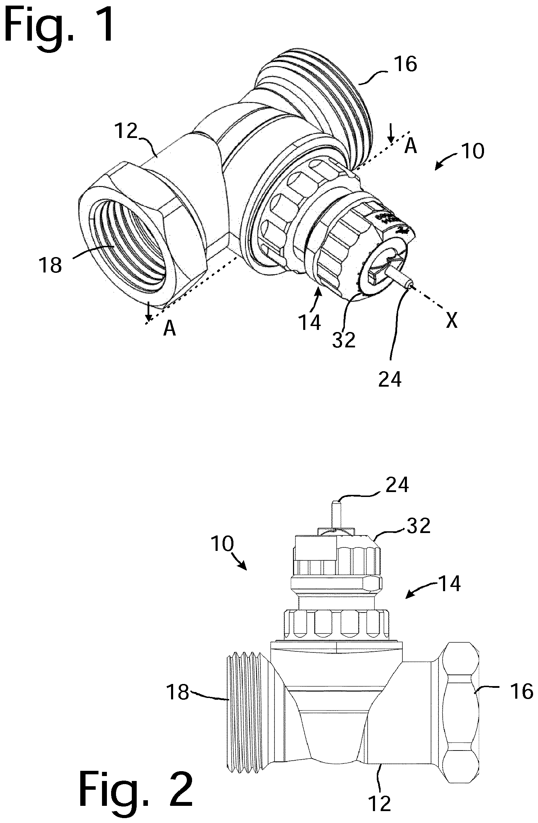

Figures 1-3 show a valve 10 including a valve body 14 inserted in a valve housing 12 with a first fluid port 16 and second fluid port 18.

The depicted embodiment of a valve 10 is the lower half of a thermostat valve which controls the flow of heating fluid from the first fluid port 16 to the second fluid port 18 dependent on the axial movement of a valve pin 24 along a longitudinal axis X. The valve 10 may be connected with its fluid ports 16, 18 between a source of heating fluid and a radiator or floor heating system. In use of the valve 10, a thermostat (not shown) is mounted on the valve. The thermostat may determine a desired amount of heating fluid to pass thorough the valve 10. To regulate the fluid flow between the fluid ports 16, 18, the thermostat axially moves the valve pin 24. The thermostat thus sets the axial position of the valve pin 24 according to a desired heat flow, depending on the current room temperature in relation to a selected heating setting.

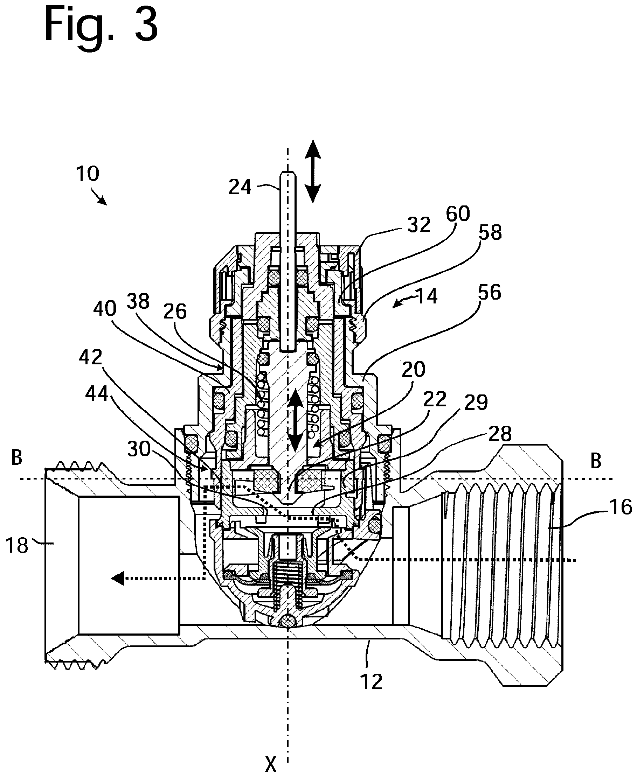

As visible from the longitudinal sectional view of figure 3, the valve pin 24 abuts against a valve element 20 (valve stem 22). The valve pin 24 may depress the valve stem 22 against the action of a spring 26. The valve stem 22 is thus movable in longitudinal direction relative to a valve seat 28 provided as an opening in a valve seat ring 29. The cross-section of a valve opening 30 formed between the end of the valve stem 22 and the valve seat 28 is thus regulated by longitudinal movement of the valve stem 22. As shown as a dotted line in figure 3, fluid from the first fluid port 16 passes through the valve opening 30 to the second fluid port 18.

While the valve 10 is shown in figure 3 in a position to be used for a flow of the heating fluid from the first fluid port to the second fluid port 18, the valve 10 is also useable for reverse flow direction. The entire valve body 14 may be rotated around the longitudinal axis X, so that the flow direction is reversed.

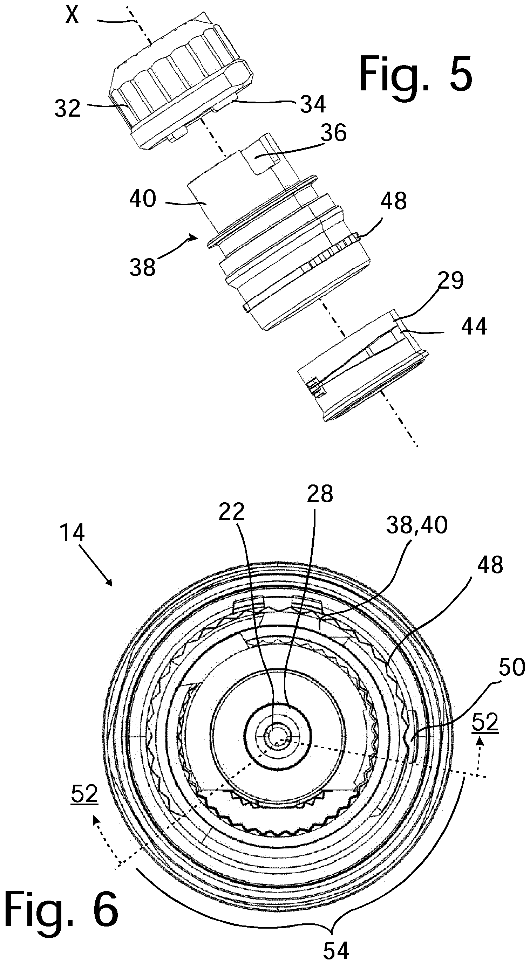

The valve 10 further comprises a presetting function by which a selectable flow resistance is provided. A ring-shaped handle 32 may be manually rotated around the longitudinal axis X. As visible in particular from the exploded view of figure 5, the handle 32 is coupled by fingers 34 engaging into cutouts 36 to a presetting element 38 (presetting sleeve 40).

The presetting sleeve 40, arranged to surround the valve stem 22 and the valve seat ring 29, is rotatable around the longitudinal axis X.

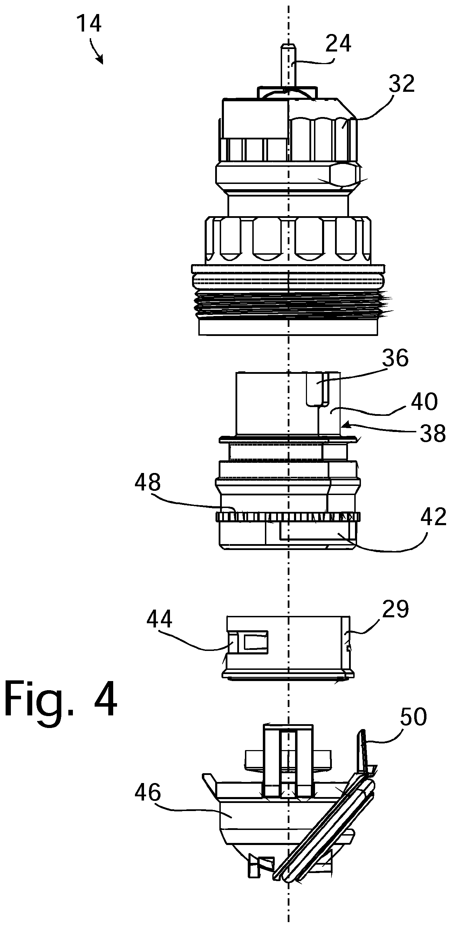

As visible in the exploded view of figure 4, the presetting sleeve 40 comprises a radial flow opening 42, which in the embodiment shown is a rectangular window. The valve seat ring 29 comprises a radial flow channel opening 44.

By relative rotational positioning of the presetting sleeve 40 and valve seat ring 29, the flow opening 42 and flow channel opening 44 can be brought into different overlap positions, thereby selecting the size of the effective cross-section available for the fluid flow.

As visible from figure 5, the radial flow channel opening 44 formed in the valve seat ring 29 has a special shape with its width varying around the circumference. By bringing the thus formed triangular window in overlap with the rectangular window forming the flow opening 42, the flow resistance can be selected. As depicted in figure 3, the fluid flow passes through the flow opening 42 in the presetting sleeve 40 and the flow channel opening 44 in the valve seat ring 29 in its path from the first to the second fluid port 16, 18.

Feedback means are provided to generate a tactile feedback to a user turning the handle 32 to adjust a rotational position of the presetting sleeve 40. In the embodiment shown, the feedback means comprise a feedback profile 48 provided on the outer surface of the feedback sleeve 40 and formed integrally therewith and an engagement element 50 provided on a lower part 46 of the valve body 14 (figure 4).

The entire lower part 46 including the engagement element 50 is made of a plastic material. The engagement element 50 is integrally formed with the lower part 46 to project upwards therefrom. Due to its thin structure and due to the flexibility of the plastic material, the engagement element 50 may be elastically deflected in radial direction. The deflection will create an opposite radial spring restoration force.

As visible in particular from the cross-sectional view of figure 6, the feedback profile 48 is a repetitive pattern of elevations projecting radially from the presetting sleeve 40. The engagement element 50 engages the feedback profile 48 by a radially projecting element positioned in between the profile elevations. As the presetting sleeve 40 is turned, the engagement element 50 is deflected radially outwards to pass over a first tooth before engaging the next position in between teeth. Thus, as the presetting sleeve 40 is rotated, the resistance against the rotation provided by the feedback means is modulated, so that a number of distinct pulses may be felt by a user turning the handle 32 manually. The user thus receives tactile feedback to the adjustment movement of the presetting sleeve 40. This allows the user to accurately adjust the overlap of the flow opening 42 and flow channel opening 44 to obtain a desired setting of flow resistance.

As depicted in figure 6, the feedback profile 48 is not provided around the entire circumference of the presetting sleeve 40. The feedback profile 48 only covers a feedback zone 52 of about 220°, whereas in a no-feedback zone 54 no feedback profile 48 is provided, such that in the no-feedback zone 54 the user will not experience a modulation to the turning resistance. This allows the user to easily find an initial setting where the engagement element 50 first engages the feedback profile 48, i. e. the boundary between the feedback zone 52 and no-feedback zone 54.

In addition to the feedback provided by feedback profile 48 and engagement element 50 as described above, tactile feedback may also be provided by different elements within the valve 10. While the engagement between the feedback structure 48 and engagement element 50 as described above is oriented in radial direction, tactile feedback may instead or in addition also be provided from the interaction of two elements in axial direction, wherein one element is rotationally coupled to the presetting element 38, and the two elements rotate relative to each other as the presetting element 38 is adjusted.

For example, a feedback structure with elevations and indentations, e.g. as teeth, may be formed at the top axial end of the presetting element 38, and an engagement element, e.g. a single elevation, may be provided on the axially abutting ring element 60 (Fig. 1). The ring element 60 does not rotate, so that upon rotation of the presetting element 38 the engagement element (not shown) will slide over the feedback structure. Since both are axially pressed onto each other by the force of the spring 26, a tactile feedback to movement of the presetting element is thus created.

The above described way of generating a tactile feedback will of course also work if arrangement of the feedback structure and engagement element are reversed, i.e. if the feedback structure (teeth) are formed on the lower portion of the ring element 60 whereas an engagement element (single elevation) is formed on the top of the presetting element 38.

As the skilled person will recognize, the above discussed embodiments are merely examples of how the invention may be carried out. Different embodiments are possible. For example, the valve 10 may also be used for cooling applications, regulating the flow of cooling liquid.

While the fluid ports 16, 18 of the valve 10 as described above are made of metal, preferably brass, most other parts may be made of a plastic material. In particular the lower part 46, presetting element 38, and handle 32 may be made of plastic, whereas a valve top 56 and fixing nut 58 may preferably be of metal.

## Claims

1. Valve (10), comprising
- a valve seat (28) arranged between a first and second fluid passage (16, 18), a valve element (20) cooperating with said valve seat (28) to regulate a fluid flow between said first and second fluid passages (16, 18), wherein a valve opening (30) is adjustable by relative movement of said valve seat (28) and valve element (20),
- a moveable presetting element (38) with a sleeve portion (40) rotatable around a longitudinal axis (X), said presetting element (38) comprising a radial flow opening (42) provided to adjust a maximum flow through said valve opening (30), **characterized by**
- feedback means (48, 50) arranged to provide a tactile feedback to movement of said presetting element (38), said feedback means (48, 50) comprising two elements, a feedback profile (48) and an engagement element (50), one of which is integrally formed with the presetting element (38).

2. Valve according to claim 1, wherein said feedback means (48, 50) are disposed to provide a pulsed force in response to said movement.

3. Valve according to claim 1 or 2, wherein said feedback means (48, 50) comprise detent means with multiple detent positions along a path of said movement.

4. Valve according to one of the above claims, wherein
- a flow channel is provided connecting said presetting element (38) to said first or second fluid passage (16, 18)
- wherein said presetting element (38) comprises a flow opening (42), said presetting element (38) being movable to selectively align said flow opening (42) with said flow channel.

5. Valve according to claim 4, wherein
- said flow channel comprises a radial flow channel opening (44) formed in a ring (29) coaxial with said sleeve portion (40),
- wherein said ring (29) and said sleeve portion (40) are rotatable relative to each other to select a degree of overlap between said flow channel opening (44) and said radial flow opening (42).

6. Valve according to claim 5, wherein
- said flow channel opening (44) and/or said radial flow opening (42) comprise at least one variable width portion, wherein said opening has a width varying around the circumference of said ring (29) or said sleeve portion (40).

7. Valve according to one of the above claims, wherein
- said presetting element (38) is movable over at least a first movement sector (52) and a second movement sector (54),
- wherein said feedback means are configured to provide said tactile feedback in said first movement sector (52),
- and wherein said feedback means are configured to provide no tactile feedback in said second movement sector (54).

8. Valve according to claim 7, wherein
- said first movement sector (52) extends over a larger portion of a movement range of said presetting element (38) than said second movement sector (54).

9. Valve according to one of the above claims, wherein
- said presetting element (38) is turnable over more than 360°.

10. Valve according to one of the above claims, wherein
- said feedback profile (48) includes a plurality of elevations and/ or indentations,
- and the engagement element (50) is spring loaded and configured to engage said feedback profile (48).

11. Valve according to claim 10, wherein
- said engagement element (50) or said feedback profile (48) is provided on said presetting element (38).

12. Valve according to one of the above claims, wherein
- said presetting element (38) comprises or is coupled to a handle (32) accessible from the outside of said valve (10).

13. Valve according to claim 12, wherein
- said handle (32) comprises a rotatable handle element,
- and a feedback profile is provided on said handle element.

## Patentansprüche

1. Ventil (10), umfassend
- einen Ventilsitz (28), der zwischen einem ersten und einem zweiten Fluiddurchgang (16, 18) angeordnet ist, ein Ventilelement (20), das mit dem Ventilsitz (28) zusammenwirkt, um einen Fluidstrom zwischen dem ersten und dem zweiten Fluiddurchgang (16, 18) zu regulieren, wobei eine Ventilöffnung (30) durch eine relative Bewegung des Ventilsitzes (28) und des Ventilelements (20) einstellbar ist,
- ein bewegliches Voreinstellelement (38) mit einem um eine Längsachse (x) drehbaren Hülsenabschnitt (40), wobei das Voreinstellelement (38) eine radiale Durchflussöffnung (42) aufweist, die zur Einstellung eines maximalen Durchflusses durch die Ventilöffnung (30) vorgesehen ist,
**gekennzeichnet durch**
- Rückkopplungsmittel (48, 50), die derart angeordnet sind, dass sie eine taktile Rückkopplung auf die Bewegung des Voreinstellungselements (38) liefern, wobei die Rückkopplungsmittel (48, 50) zwei Elemente umfassen, ein Rückkopplungsprofil (48) und ein Eingriffselement (50), von denen eines einstückig mit dem Voreinstellungselement (38) ausgebildet ist.

2. Ventil nach Anspruch 1, wobei die Rückkopplungsmittel (48, 50) derart angeordnet sind, dass sie als Reaktion auf die Bewegung eine gepulste Kraft erzeugen.

3. Ventil nach Anspruch 1 oder 2, wobei die Rückkopplungsmittel (48, 50) Rastmittel mit mehreren Rastpositionen entlang eines Weges der Bewegung umfassen.

4. Ventil nach einem der vorstehenden Ansprüche, wobei
- ein Strömungskanal vorgesehen ist, der das Voreinstellelement (38) mit dem ersten oder zweiten Fluidkanal (16, 18) verbindet
- wobei das Voreinstellelement (38) eine Durchflussöffnung (42) umfasst, wobei das Voreinstellelement (38) beweglich ist, um die Durchflussöffnung (42) selektiv mit dem Strömungskanal auszurichten.

5. Ventil nach Anspruch 4, wobei
- der Strömungskanal eine radiale Strömungskanalöffnung (44) umfasst, die in einem Ring (29) koaxial zum Hülsenteil (40) ausgebildet ist,
- wobei der Ring (29) und der Hülsenabschnitt (40) relativ zueinander drehbar sind, um einen Überlappungsgrad zwischen der Strömungskanalöffnung (44) und der radialen Strömungsöffnung (42) zu wählen.

6. Ventil nach Anspruch 5, wobei
- die Strömungskanalöffnung (44) und/oder die radiale Strömungsöffnung (42) mindestens einen Abschnitt mit variabler Breite umfassen, wobei die Öffnung eine um den Umfang des Rings (29) oder des Hülsenabschnitts (40) variierende Breite aufweist.

7. Ventil nach einem der vorstehenden Ansprüche, wobei
- das Voreinstellelement (38) über mindestens einen ersten Bewegungssektor (52) und einen zweiten Bewegungssektor (54) beweglich ist,
- wobei die Rückkopplungsmittel zum Bereitstellen der taktilen Rückkopplung in dem ersten Bewegungssektor (52) ausgebildet sind,
- und wobei die Rückkopplungsmittel derart ausgebildet sind, dass sie in dem zweiten Bewegungssektor (54) keine taktile Rückkopplung liefern.

8. Ventil nach Anspruch 7, wobei
- der erste Bewegungssektor (52) sich über einen größeren Teil eines Bewegungsbereichs des Voreinstellungselements (38) als der zweite Bewegungssektor (54) erstreckt.

9. Ventil nach einem der vorstehenden Ansprüche, wobei
- das Voreinstellungselement (38) um mehr als 360° drehbar ist.

10. Ventil nach einem der vorstehenden Ansprüche, wobei
- das Profil (48) eine Vielzahl von Erhebungen und/oder Vertiefungen aufweist,
- und das Eingriffselement (50) federbelastet und derart ausgebildet ist, dass es mit dem Rückkopplungsprofil (48) in Eingriff kommt.

11. Ventil nach Anspruch 10, wobei
- das Eingriffselement (50) oder das Rückkopplungsprofil (48) auf dem Voreinstellelement (38) vorgesehen sind.

12. Ventil nach einem der vorstehenden Ansprüche, wobei
- das Voreinstellelement (38) einen von der Außenseite des Ventils (10) zugänglichen Griff (32) umfasst oder mit diesem gekoppelt ist.

13. Ventil nach Anspruch 12, wobei
- der Griff (32) ein drehbares Griffelement umfasst,
- und ein Rückkopplungsprofil auf dem Griffelement vorgesehen ist.

## Revendications

1. Soupape (10), comprenant
- un siège de soupape (28) disposé entre un premier et un deuxième passage de fluide (16, 18), un élément de soupape (20) coopérant avec ledit siège de soupape (28) pour réguler un écoulement de fluide entre lesdits premier et deuxième passage de fluide (16, 18), dans lequel une ouverture de soupape (30) est réglable par un mouvement relatif dudit siège de soupape (28) et dudit élément de soupape (20),
- un élément de préréglage mobile (38) avec une partie de manchon (40) pouvant tourner autour d'un axe longitudinal (x), ledit élément de préréglage (38) comprenant une ouverture d'écoulement radiale (42) prévue pour régler un écoulement maximal à travers ladite ouverture de soupape (30),
**caractérisé par**
- des moyens de rétroaction (48, 50) agencés pour fournir une rétroaction tactile au mouvement dudit élément de préréglage (38), lesdits moyens de rétroaction (48, 50) comprenant deux éléments : un profil de rétroaction (48) et un élément d'engagement (50), dont l'un est formé intégralement avec l'élément de préréglage (38).

2. Soupape selon la revendication 1, dans laquelle lesdits moyens de rétroaction (48, 50) sont disposés pour fournir une force pulsée en réponse audit mouvement.

3. Soupape selon la revendication 1 ou 2, dans laquelle lesdits moyens de rétroaction (48, 50) comprennent des moyens de détente avec de multiples positions de détente le long d'un trajet dudit mouvement.

4. Soupape selon l'une des revendications précédentes, dans laquelle
- un canal d'écoulement est prévu reliant ledit élément de préréglage (38) audit premier ou second passage de fluide (16, 18)
- dans lequel ledit élément de préréglage (38) comprend une ouverture d'écoulement (42), ledit élément de préréglage (38) étant mobile pour aligner sélectivement ladite ouverture d'écoulement (42) avec ledit canal d'écoulement.

5. Soupape selon la revendication 4, dans laquelle
- ledit canal d'écoulement comprend une ouverture de canal d'écoulement radial (44) formée dans un anneau (29) coaxial avec ladite partie de manchon (40),
- dans lequel ledit anneau (29) et ladite partie de manchon (40) peuvent tourner l'une par rapport à l'autre pour sélectionner un degré de chevauchement entre ladite ouverture de canal d'écoulement (44) et ladite ouverture d'écoulement radiale (42).

6. Soupape selon la revendication 5, dans laquelle
- ladite ouverture de canal d'écoulement (44) et/ou ladite ouverture d'écoulement radiale (42) comprend au moins une partie de largeur variable, dans laquelle ladite ouverture a une largeur variant autour de la circonférence dudit anneau (29) ou de ladite partie de manchon (40).

7. Soupape selon l'une des revendications précédentes, dans laquelle
- ledit élément de préréglage (38) est mobile sur au moins un premier secteur de mouvement (52) et un second secteur de mouvement (54),
- dans lequel lesdits moyens de rétroaction sont configurés pour fournir ladite rétroaction tactile dans ledit premier secteur de mouvement (52),
- et dans lequel lesdits moyens de rétroaction sont configurés pour ne fournir aucune rétroaction tactile dans ledit second secteur de mouvement (54).

8. Soupape selon la revendication 7, dans laquelle
- ledit premier secteur de mouvement (52) s'étend sur une plus grande partie d'une plage de mouvement dudit élément de préréglage (38) que ledit second secteur de mouvement (54).

9. Soupape selon l'une des revendications précédentes, dans laquelle
- ledit élément de préréglage (38) peut être tourné sur plus de 360°.

10. Soupape selon l'une des revendications précédentes, dans laquelle
- ledit profil de retour (48) comprend une pluralité d'élévations et/ou d'indentations,
- et l'élément d'engagement (50) est chargé par ressort et configuré pour engager ledit profil de retour (48).

11. Soupape selon la revendication 10, dans laquelle
- ledit élément d'engagement (50) ou ledit profil de rétroaction (48) est prévu sur ledit élément de préréglage (38).

12. Soupape selon l'une des revendications précédentes, dans laquelle
- ledit élément de préréglage (38) comprend ou est couplé à une poignée (32) accessible depuis l'extérieur de ladite soupape (10).

13. Soupape selon la revendication 12, dans laquelle
- ladite poignée (32) comprend un élément de poignée rotatif,
- et un profil de rétroaction est fourni sur ledit élément de poignée.
